(19)

Europäisches
Patentamt
European
Patent Office
Office européen
des brevets

(11)     **EP 1 924 080 A1**

(12)     **EUROPEAN PATENT APPLICATION**

(43) Date of publication:
    **21.05.2008 Bulletin 2008/21**

(51) Int Cl.:
    *H04N 3/15* (2006.01)

(21) Application number: **07120688.2**

(22) Date of filing: **14.11.2007**

(84) Designated Contracting States:
    **AT BE BG CH CY CZ DE DK EE ES FI FR GB GR
    HU IE IS IT LI LT LU LV MC MT NL PL PT RO SE
    SI SK TR**
    Designated Extension States:
    **AL BA HR MK RS**

(30) Priority: **14.11.2006 KR 20060112413**

(71) Applicant: **Samsung Electronics Co., Ltd.
    Suwon-si, Gyeonggi-Do (KR)**

(72) Inventors:
    • **Woo-jong, Cho
      c/o Samsung Advanced Institute of Technology
      446-712 Gyeonggi-do (KR)**
    • **Seong-deok, Lee
      c/o Samsung Advanced Institute of Technology
      446-712 Gyeonggi-do (KR)**
    • **Sang-on, Choi
      c/o Samsung Advanced Institute of Technology
      446-712 Gyeonggi-do (KR)**
    • **Mun-cheol, Choi
      c/o Samsung Advanced Institute of Technology
      446-712 Gyeonggi-do (KR)**
    • **Hyun-chul, Song
      c/o Samsung Advanced Institute of Technology
      446-712 Gyeonggi-do (KR)**

(74) Representative: **Grünecker, Kinkeldey,
    Stockmair & Schwanhäusser
    Anwaltssozietät
    Leopoldstrasse 4
    80802 München (DE)**

(54)     **High dynamic range image sensor and method and medium for measuring charges in pixel**

(57)     A high dynamic range image sensor and a method and medium for measuring charges in a pixel are provided. The high dynamic range image sensor includes a sensor that resets a predetermined pixel when the pixel has reached a saturation level, a storage unit that stores the number of times the pixel has been reset, and a measurement unit that measures the quantity of light received in the pixel using the number of times the pixel has been reset, which is simply referred to as the number of resets, and the quantity of charges remaining after the pixel is finally reset.

**FIG. 5**

**Description**

CROSS-REFERENCE TO RELATED APPLICATIONS

This application claims the priority benefit of Korean Patent Application No. 10-2006-0112413 filed on November 14, 2006 in the Korean Intellectual Property Office, the disclosure of which is incorporated herein by reference in its entirety.

BACKGROUND OF THE INVENTION

1. Field of the Invention

The present invention relates to a high dynamic range image sensor and a method and medium for measuring charges in a pixel, and more particularly, to a high dynamic range image sensor of resetting a pixel when the pixel reaches a saturation level and measuring charges in the pixel using the number of times the pixel has been reset, saturation values, and charge residues, and a method of measuring charges in a pixel.

2. Description of the Related Art

Image sensors for use in mobile devices, automobiles, or monitors, have dynamic ranges of approximately 60 dB. Such image sensors having a relatively limited dynamic range may not properly respond to a variation in luminance, suggesting that a large difference between bright and dark portions may result in a blurred image. Accordingly, a proper photographing operation may not be achieved.
In particular, if a subject to be photographed is in a bright condition, pixels of an image sensor are saturated, which impedes a normal photographing operation.
In a conventional complementary metal-oxide semiconductor (CMOS) image sensor, when a predetermined pixel receives high intensity light so that it reaches a saturation level and outputs a constant output voltage, a variation in output voltage is small with respect to an increase in light quantity, causing a problem of degradation in image quality. That is to say, if a particular pixel reaches a saturation level, it is not possible to normally measure an output voltage of the pixel for additional light quantity, which causes a reduction in dynamic range, ultimately resulting in degradation in performance of a camera module using the image sensor.

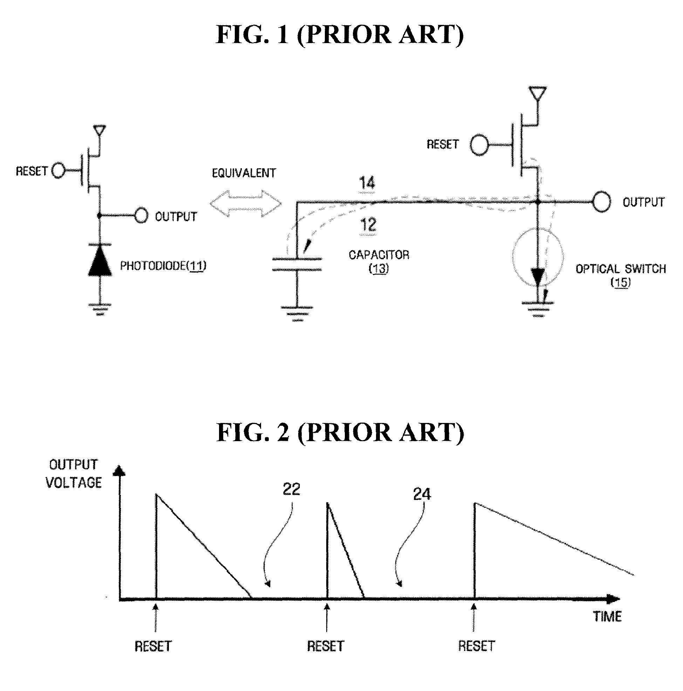

FIG. 1 illustrates the structure and operation of a conventional image sensor
As shown in FIG. 1, a photodiode (PD) 11 includes a capacitor 13 and an optical switch 15.
First, if a pixel is reset, charges accumulate on the capacitor 13 in operation 12.
Then, the capacitor 13 starts discharging according to the quantity of light received in the pixel. In operation 14, if the pixel receives low intensity light, the discharging is performed slowly, and if the pixel receives high intensity light, the discharging is performed rapidly. In the case of a digital camera, for example, the discharging of a capacitor may be performed during a capture mode when photographing or a preview mode when focusing.
FIG. 2 illustrates the output voltage of a pixel at a saturation level.
Before a pixel reaches a saturation level, the output voltage of the pixel varies according to the quantity of light received in the pixel, and photographing is normally performed.
However, if a capacitor is discharged by high intensity light received in a pixel before the pixel is reset, the pixel reaches saturation states 22 and 24 in which a variation in the output voltage according to the quantity of light additionally received in the pixel is very small, thereby undesirably degrading the quality of a captured image.

SUMMARY OF THE INVENTION

According to an aspect of the present invention, the present invention provides a high dynamic range image sensor and a method of extending a dynamic range to enable high dynamic range imaging.
According to an aspect of the present invention, there is provided a high dynamic range image sensor including a sensor which resets a pixel when the pixel has reached a saturation level, a storage unit which stores a number of times the pixel has been reset, and a measurement unit which measures a quantity of light received in the pixel using the number of times the pixel has been reset, which is the number of resets, and a quantity of charges remaining after the pixel is finally reset.
According to another aspect of the present invention, there is provided a method of measuring charges in a pixel, the method including resetting the pixel when the pixel has reached a saturation level" storing a number of times the pixel has been reset, and measuring a quantity of light received in the pixel using the number of times the pixel has been reset and a quantity of charges remaining after the pixel is finally reset.

According to another aspect of the present invention, there is provided a high dynamic range image sensor including an image sensor having a pixel which receives a quantity of light and which resets the pixel when the pixel has reached a saturation level; and a measurement unit which measures the quantity of light received in the pixel using the number of times the pixel has been reset, and a quantity of charges remaining after the pixel is finally reset.

According to another aspect of the present invention, there is provided at least one computer readable medium storing computer readable instructions to implement methods of the present invention.

BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:

FIG. 1 illustrates the structure and operation of a conventional image sensor;
FIG. 2 illustrates the output voltage of a pixel at a saturation level;
FIG. 3 illustrates the principle of resetting a pixel when the pixel is at a saturation level, according to an exemplary embodiment of the present invention;
FIG. 4 is a block diagram of an image sensor according to an exemplary embodiment of the present invention;
FIGS. 5 through 8 illustrate detailed diagrams of exemplary high dynamic range image sensors according to exemplary embodiments of the present invention;
FIG. 9 is a diagram illustrating a flip-flop as an exemplary storage unit of outputting the number of times a pixel according to an exemplary embodiment of the present invention has been reset when the pixel reaches a saturation level a predetermined number of times; and
FIG. 10 is a flow diagram illustrating a method of measuring the quantity of light received in a pixel according to an exemplary embodiment of the present invention.

DETAILED DESCRIPTION OF THE PREFERRED EMBODIMENTS

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

The present invention may, however, be embodied in many different forms and should not be construed as being limited to exemplary embodiments set forth herein. Rather, these exemplary embodiments are provided so that this disclosure will be thorough and complete and will fully convey the concept of the invention to those of ordinary skill in the art.

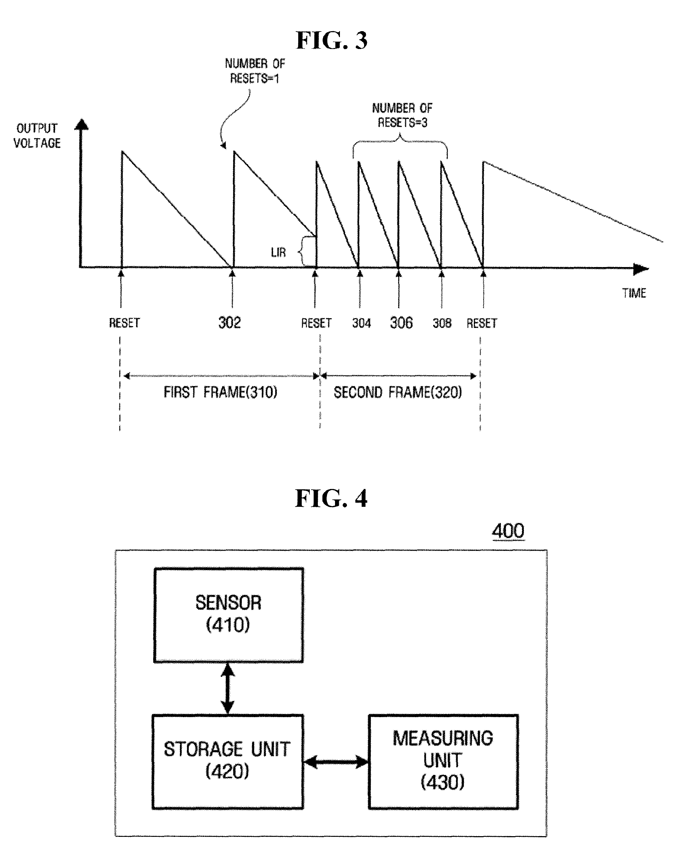

FIG. 3 illustrates a principle of resetting a pixel when the pixel is at a saturation level, according to an exemplary embodiment of the present invention.

In a case where a particular pixel reaches a saturation level, an output voltage of the pixel may not be normally measured depending on the quantity of light, i.e., expressed as the quantity of charges, received in the pixel. To avoid this, the pixel is to be reset. For each pixel, there are two types of reset operation. In a first type of reset operation called a global reset operation, a pixel is reset upon initialization of a new frame. In this case, all pixels are concurrently recharged. In a second type of reset operation called a local reset operation, each pixel is recharged by triggering. In this case, the recharging states of each pixel may vary according to the quantity of light received in each pixel. In other words, some pixels may be recharged and some may not be recharged. In addition, some pixels may be recharged fast and some may be recharged slowly. The number of times the pixel has been reset (simply referred to hereinafter as "the number of resets") and the residual light quantity of the pixel are obtained, in order to measure the quantity of light received in the pixel even in an area where the pixel is saturated.

As shown in FIG. 3, in the present invention, when a pixel reaches a saturation level, the pixel is reset a number of times 302, 304, 306, and 308. In this case, since the quantity of light required for the pixel to reach the saturation level is determined, an integrated quantity of light received in the pixel can be measured by determining the number of resets. Preferably, the quantity of light received in the pixel can be expressed as follows:

$$\text{Quantity of Light Received in Pixel} = SV * NRC + LIR$$

where SV stands for a saturation value representing the quantity of light required for a particular pixel to reach a saturation level, NRC stands for a total number of resets, and LIR stands for a residual light quantity representing the quantity of light, i.e., the quantity of charges, remaining after the pixel is finally reset. These values may be measured for a single pixel during a period of one frame.

In a first frame 310, for example, assuming that a saturation value is 32, the number of resets is 1, and a residual light quantity, that is, an output voltage level of the pixel after the pixel is reset is 10, the quantity of light received in the pixel is measured using the equation given above to obtain a total of 42 (32*1+10).

Similarly, the quantity of light received in the pixel in a second frame 320 can be measured using the equation given above and the number of resets in a second frame 320, which is a known value, that is, 3.

According to the present invention, a saturation value is stored in a pixel and a self-reset operation is performed in each pixel. By doing so, it is possible to overcome the problem with the prior art, that is, incapability of normally measuring an output voltage of a pixel at a saturation level. The present invention will now be described in greater detail through an exemplary embodiment.

FIG. 4 is a block diagram of an image sensor (400) according to an exemplary embodiment of the present invention.

The image sensor 400 includes a sensor 410, a storage unit 420, and a measuring unit 430.

The sensor 410 senses whether the pixel has reached a saturation level or not. To this end, the sensor 410 determines whether an output voltage of the pixel is equal to or smaller than a predetermined threshold value.

Here, in order to sense whether the pixel has reached a saturation level or not, a trigger may be connected to the output port of a photodiode of the pixel. If the output voltage of the pixel is equal to or smaller than a predetermined threshold value, charges of a capacitor of the photodiode of the pixel are all discharged, suggesting that the pixel has reached the saturation level.

Therefore, the trigger transfers a reset signal to the pixel to reset the pixel. During this process, the capacitor of the photodiode is recharged. The sensor 410 measures the saturation value and the charge residue after the pixel is reset and outputs the same to the measuring unit 430, which will later be described.

Since the saturated state of the pixel does not last throughout the process, it is possible to normally measure the output voltage of the pixel according to the quantity of light received in the pixel. In the conventional image sensor implemented such that a reset signal is externally applied to every frame, once a pixel is saturated, the pixel is kept at a saturated state until a new frame starts. In an exemplary embodiment of the present invention, however, when a pixel reaches a saturation level, the pixel is subjected to a self-feedback mechanism to be reset.

The storage unit 420 stores the number of resets of the pixel. Preferably, the storage unit 420 may comprise a flip-flop as a memory device. For reference, the flip-flop is an example of a bistable multivibrator, that is, a device with two stable states. Since the flip-flop is capable of discriminating 1 from 0 and storing the discriminated values 1 and 0 therein, it is also called a binary value device. In the current exemplary embodiment, a JK or RS flip-flop is employed by way of example.

If a select signal or reset signal is input, suggesting that a frame has expired, the flip-flop is reset. That is to say, if the flip-flop is reset, the stored number of resets of the pixel is cleared.

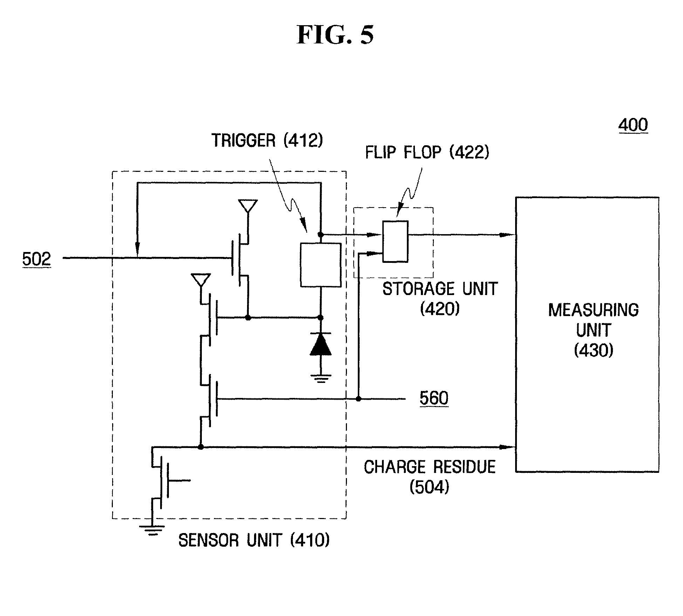

In addition, the storage unit 420 has various devices including a RAM (e.g., DRAM; Dynamic Random Access Memory), a counter, a capacitor, a transistor, a comparator, and so on, connected thereto to measure the number of resets of the pixel and can be used as a storage device for storing the measured number of resets. Structures of exemplary high dynamic range image sensors will later be described in greater detail with reference to FIGS. 5 through 8.

The measuring unit 430 receives the number of resets and the saturation value from the storage unit 420, and measures the quantity of light received in the pixel using the quantity of charges remaining after the pixel is finally reset. In this case, the measuring unit 430 measures the quantity of light received in the pixel using the equation given above. As described above, the number of resets represents the total number of times the pixel has been reset, and the saturation value represents the quantity of light required for a particular pixel to reach a saturation level. In addition, the residual light quantity represents the quantity of light, i.e., the quantity of charges, remaining after the pixel has recently been reset. Therefore, the quantity of light received in the pixel can be measured even in a region where the pixel is saturated, thereby attaining enhanced image quality.

Hereinafter, structures of exemplary high dynamic range image sensors will be described in detail with reference to FIGS. 5 through 8.

FIG. 5 is a detailed diagram of an exemplary high dynamic range image sensor according to an exemplary embodiment of the present invention.

As shown in FIG. 5, a trigger 412 may be connected to the output port of a photodiode of a pixel, thereby determining whether an output voltage of the pixel is greater than or equal to a predetermined threshold value. The trigger 412 may be a modified version of a Schmitt trigger, which is widely used to sense whether or not the output voltage of a pixel is equal to or smaller than a predetermined threshold value. When the output voltage of the pixel is equal to or smaller than the predetermined threshold value, the trigger 412 transfers a reset signal to the pixel to reset the pixel (502).

The number of resets can be measured by the flip-flop 422 and then stored, and the flip-flop 422 provides the number of resets and saturation values to the measuring unit 430. The measuring unit 430 measures the quantity of light received in the pixel using the number of resets and the saturation values received with charge residues Vout (504).

In addition, if a select signal or a frame reset signal is input, suggesting that a frame has expired, the stored number of resets, which is stored in the flip-flop 422, is cleared.

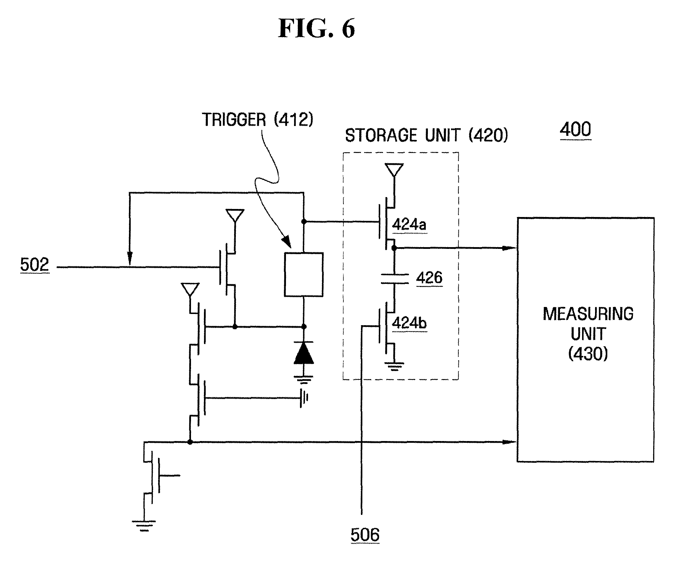

In addition to the flip-flop 422, a RAM (e.g., DRAM; Dynamic Random Access Memory) can be used as a memory device. Further, as shown in FIG. 6, when the pixel reaches a saturation level, the number of resets and saturation values may be output to the measuring unit 430 using a capacitor 426 and transistors 424a and 424b. Here, in a case where the pixel has reached a saturation level, which is sensed by a charged state of the capacitor 426, it is possible to determine whether the pixel is saturated or not. That is to say, in a case where the capacitor 426 is fully charged, it is determined that the pixel has reached the saturation level. Based on the determination result, the number of resets of the pixel can be measured.

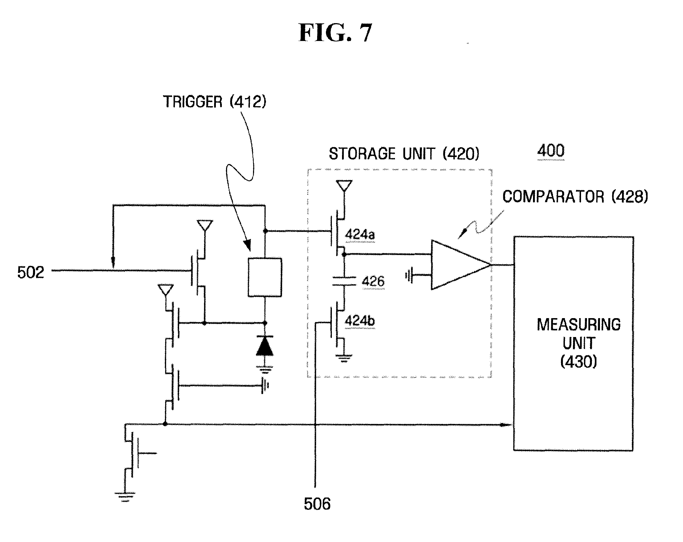

As shown in FIG. 7, an error due to a delayed discharge of the capacitor 426 can be eliminated by additionally connecting a comparator 428 to the output port of the capacitor 426 shown in FIG. 6

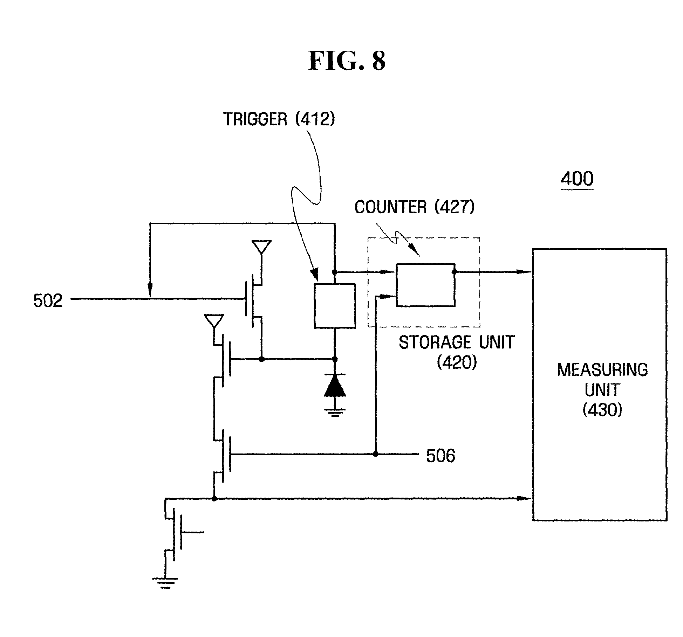

As shown in FIG. 8, a counter 427, instead of the flip-flop 422, may be connected to the output port of the capacitor 426, and the counter 427 may be used to measure the number of resets of the pixel by counting saturated pulses of the pixel. Here, the counter 427 may be either a synchronous counter or an asynchronous counter.

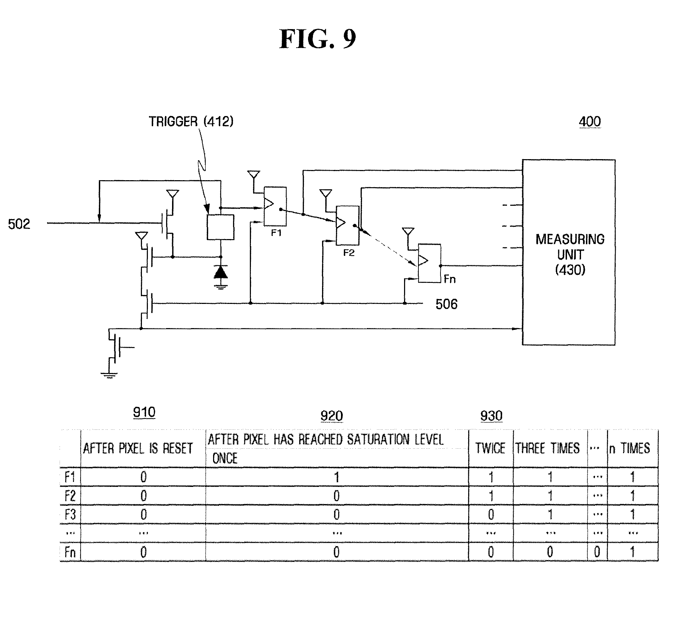

FIG. 9 is a diagram illustrating a flip-flop as an exemplary storage unit of outputting the number of times a pixel according to an exemplary embodiment of the present invention has been reset when the pixel reaches a saturation level a predetermined number of times.

As shown in FIG. 9, if a new frame starts, the number of resets stored in the flip-flop is cleared (910).

After the pixel has reached a saturation level once, the first flip-flop F1 stores a saturation value 1 and then outputs the same to a measuring unit (430 of FIG. 4)(920). In the same manner, after the pixel has reached a saturation level twice, each of the first and second flip-flops F1 and F2 stores a saturation value 1 and then outputs the same to the measuring unit 430. Likewise, if the pixel has reached a saturation level n times, each of the first through nth flip-flops F1-Fn stores a saturation value 1 and then outputs the same to the measuring unit 430. Accordingly, the measuring unit 430 obtains a total number of resets of the pixel, which can be used in measuring the quantity of light received in the pixel.

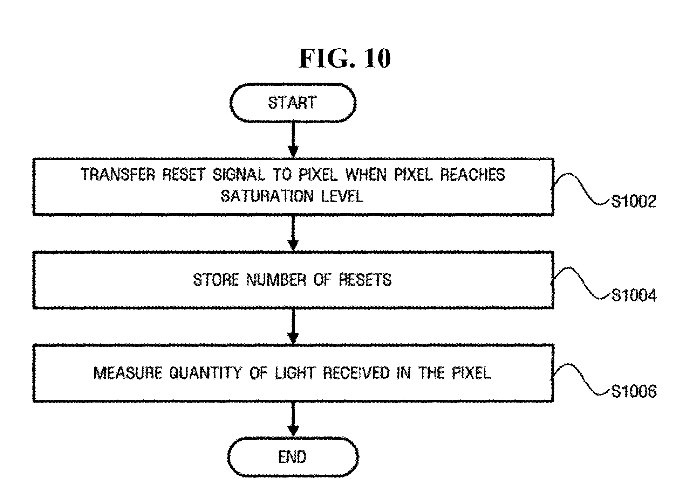

FIG. 10 is a flow diagram illustrating a method of measuring the quantity of light received in a pixel according to an exemplary embodiment of the present invention.

Referring to FIG. 10 and FIG. 4, when the pixel has reached a saturation level, the sensor 410 transfers a reset signal to the pixel in operation S1002. Here, in order to sense whether or not the pixel has reached a saturation level, a trigger may be employed.

In operation S1004, the storage unit 420 stores the number of resets of the pixel. Here, the storage unit 420 may be formed by at least one device among a flip-flop, a RAM, a counter, a capacitor, a transistor, a comparator, and so on, and the storage unit 420 measures the number of resets of the pixel or stores the same.

Next, the measuring unit 430 measures the quantity of light received in the pixel using the number of resets, the quantity of light required for the pixel to reach a saturation level, and the quantity of charges remaining after the pixel is finally reset, in operation S1006.

In addition to the above-described exemplary embodiments, exemplary embodiments of the present invention can also be implemented by executing computer readable code/instructions in/on a medium/media, e.g., a computer readable medium/media. The medium/media can correspond to any medium/media permitting the storing and/or transmission of the computer readable code/instructions. The medium/media may also include, alone or in combination with the computer readable code/instructions, data files, data structures, and the like. Examples of code/instructions include both machine code, such as produced by a compiler, and files containing higher level code that may be executed by a computing device and the like using an interpreter. In addition, code/instructions may include functional programs and code segments.

The computer readable code/instructions can be recorded/transferred in/on a medium/media in a variety of ways, with examples of the medium/media including magnetic storage media (e.g., floppy disks, hard disks, magnetic tapes, etc.), optical media (e.g., CD-ROMs, DVDs, etc.), magneto-optical media (e.g., floptical disks), hardware storage devices (e.g., read only memory media, random access memory media, flash memories, etc.) and storage/transmission media such as carrier waves transmitting signals, which may include computer readable code/instructions, data files, data structures, etc. The computer readable code/instructions may be executed by one or more processors. The computer readable code/instructions may also be executed and/or embodied in at least one application specific integrated circuit (ASIC) or Field Programmable Gate Array (FPGA)

In addition, one or more software modules or one or more hardware modules may be configured in order to perform the operations of the above-described exemplary embodiments.

The term "module", as used herein, denotes, but is not limited to, a software component, a hardware component, a plurality of software components, a plurality of hardware components, a combination of a software component and a hardware component, a combination of a plurality of software components and a hardware component, a combination of a software component and a plurality of hardware components, or a combination of a plurality of software components and a plurality of hardware components, which performs certain tasks. A module may advantageously be configured to reside on the addressable storage medium/media and configured to execute on one or more processors. Thus, a module may include, by way of example, components, such as software components, application specific software components, object-oriented software components, class components and task components, processes, functions, operations, execution threads, attributes, procedures, subroutines, segments of program code, drivers, firmware, microcode, circuitry, data, databases, data structures, tables, arrays, and variables. The functionality provided for in the components or modules may be combined into fewer components or modules or may be further separated into additional components or modules. Further, the components or modules can operate at least one processor (e.g. central processing unit (CPU)) provided in a device. In addition, examples of a hardware components include an application specific integrated circuit (ASIC) and Field Programmable Gate Array (FPGA). As indicated above, a module can also denote a combination of a software component(s) and a hardware component(s). These hardware components may also be one or more processors.

The computer readable code/instructions and computer readable medium/media may be those specially designed and constructed for the purposes of the present invention, or they may be of the kind well-known and available to those skilled in the art of computer hardware and/or computer software.

As described above, the high dynamic range image sensor and the method and medium for measuring charges in a pixel provide according to the present invention provides at least the following advantages.

First, since an error due to a delayed discharge can be eliminated, a delay due to multiple exposure operations is avoidable.

Second, a reduction in the resolution of an image sensor can be reduced, and the image sensor can be readily used without changing the volume or configuration of the corresponding optical system.

Third, the image sensor can be integrally formed in the production stage, and high-performance dynamic characteristics can be achieved.

Although a few exemplary embodiments of the present invention have been shown and described, it would be appreciated by those skilled in the art that changes may be made in these exemplary embodiments without departing from the principles and spirit of the invention, the scope of which is defined in the claims and their equivalents.

**Claims**

1.    A high dynamic range image sensor comprising:

  a sensor which resets a pixel when the pixel has reached a saturation level;
  a storage unit which stores a number of times the pixel has been reset; and
  a measurement unit which measures a quantity of light received in the pixel using the number of times the pixel has been reset, which is the number of resets, and a quantity of charges remaining after the pixel is finally reset.

2.    The high dynamic range image sensor of claim 1, wherein the sensor senses whether the pixel has reached the saturation level using a trigger.

3.    The high dynamic range image sensor of claim 2, wherein the trigger is connected to an output port of a photodiode of the pixel.

4.    The high dynamic range image sensor of claim 1, wherein the storage unit stores the number of resets using at least one of a flip-flop, a Random Access Memory (RAM), and a counter.

5.    The high dynamic range image sensor of claim 4, wherein the number of resets stored in the storage unit is cleared when a new frame starts.

6.    The high dynamic range image sensor of claim 1, wherein:

  the storage unit includes at least one of a capacitor, a transistor, and a comparator, and
  when the pixel has reached the saturation level, the capacitor is fully charged, and the comparator eliminates an error due to a delayed discharge of the capacitor.

**7.** The high dynamic range image sensor of claim 1, wherein the measurement unit measures the quantity of light received in the pixel during a period of one frame.

**8.** A method of measuring charges in a pixel, the method comprising:

resetting the pixel when the pixel has reached a saturation level;
storing a number of times the pixel has been reset; and
measuring a quantity of light received in the pixel using the number of times the pixel has been reset and a quantity of charges remaining after the pixel is finally reset.

**9.** The method of claim 8, wherein the resetting of the pixel further comprises sensing whether the pixel has reached the saturation level using a trigger.

**10.** The method of claim 9, wherein the trigger is connected to an output port of a photodiode of the pixel.

**11.** The method of claim 8, wherein the storing of the number of times the pixel has been reset comprises storing the number of times the pixel has been reset using at least one of a flip-flop, a Random Access Memory (RAM), and a counter.

**12.** The method of claim 11, wherein the number of times the pixel has been reset stored in the storage unit is cleared when a new frame starts.

**13.** The method of claim 8, wherein:

the storing of the number of times the pixel has been reset comprises storing the number of times the pixel has been reset using at least one of a capacitor, a transistor, and a comparator, and
when the pixel has reached the saturation level, the capacitor is fully charged, and an error due to a delayed discharge of the capacitor is eliminated.

**14.** The method of claim 8, wherein the measuring of the quantity of light received in the pixel comprises measuring the quantity of light received in the pixel during a period of one frame.

**15.** At least one computer readable medium storing computer readable instructions that control at least one processor to implement the method of claim 8.

**16.** A high dynamic range image sensor comprising:

an image sensor having a pixel which receives a quantity of light and which resets the pixel when the pixel has reached a saturation level; and
a measurement unit which measures the quantity of light received in the pixel using the number of times the pixel has been reset, and a quantity of charges remaining after the pixel is finally reset.

# FIG. 1 (PRIOR ART)

RESET

OUTPUT

PHOTODIODE(11)

EQUIVALENT

14

12

CAPACITOR
(13)

RESET

OUTPUT

OPTICAL SWITCH
(15)

# FIG. 2 (PRIOR ART)

OUTPUT
VOLTAGE

22

24

TIME

RESET    RESET    RESET

# FIG. 3

NUMBER OF
RESETS=1

NUMBER OF
RESETS=3

OUTPUT
VOLTAGE

LIR

TIME

RESET 302 RESET 304 306 308 RESET

FIRST FRAME(310) SECOND FRAME(320)

# FIG. 4

<u>400</u>

SENSOR
(410)

STORAGE UNIT
(420)

MEASURING
UNIT
(430)

# FIG. 5

400

TRIGGER (412)    FLIP FLOP (422)

502

STORAGE UNIT
(420)

MEASURING
UNIT
(430)

560

CHARGE RESIDUE
(504)

SENSOR UNIT (410)

# FIG. 6

TRIGGER (412)

STORAGE UNIT (420)

400

502

424a

426

424b

MEASURING
UNIT
(430)

506

# FIG. 7

TRIGGER (412)

STORAGE UNIT (420)

400

COMPARATOR (428)

502

424a

426

424b

MEASURING
UNIT
(430)

506

# FIG. 8

TRIGGER (412)

COUNTER (427)

400

STORAGE UNIT
(420)

MEASURING
UNIT
(430)

502

506

# FIG. 9

TRIGGER (412)             400

502

MEASURING
UNIT
(430)

F1

F2

Fn

506

| | AFTER PIXEL IS RESET | AFTER PIXEL HAS REACHED SATURATION LEVEL ONCE | TWICE | THREE TIMES | ... | n TIMES |
|---|---|---|---|---|---|---|
| | 910 | 920 | 930 | | | |
| F1 | 0 | 1 | 1 | 1 | ... | 1 |
| F2 | 0 | 0 | 1 | 1 | ... | 1 |
| F3 | 0 | 0 | 0 | 1 | ... | 1 |
| ... | ... | ... | ... | ... | ... | ... |
| Fn | 0 | 0 | 0 | 0 | 0 | 1 |

EP 1 924 080 A1

# FIG. 10

START

TRANSFER RESET SIGNAL TO PIXEL WHEN PIXEL REACHES SATURATION LEVEL — S1002

STORE NUMBER OF RESETS — S1004

MEASURE QUANTITY OF LIGHT RECEIVED IN THE PIXEL — S1006

END

**European Patent Office**

**EUROPEAN SEARCH REPORT**

Application Number

EP 07 12 0688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 130 713 A (MERRILL RICHARD BILLINGS [US]) 10 October 2000 (2000-10-10) * column 6, line 63 - column 7, line 1; figure 4e * ----- | 1-16 | INV. H04N3/15 |
| X | WO 2006/061828 A (BARNEA DANIEL I [IL]; SOREK NOAM [IL]) 15 June 2006 (2006-06-15) * page 3, line 24 - line 27 * ----- | 1-16 | |
| X | WO 2006/113414 A (CANESTA INC [US]; BAMJI CYRUS [US]; SALAMA KHALED [US]) 26 October 2006 (2006-10-26) * paragraph [0023] * ----- | 1-16 | |

| | | | TECHNICAL FIELDS SEARCHED (IPC) |
|---|---|---|---|
| | | | H04N |

The present search report has been drawn up for all claims

| Place of search | Date of completion of the search | Examiner |
|---|---|---|
| The Hague | 18 February 2008 | Bequet, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 924 080 A1**

## ANNEX TO THE EUROPEAN SEARCH REPORT
## ON EUROPEAN PATENT APPLICATION NO.

EP 07 12 0688

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2008

| Patent document cited in search report | | Publication date | Patent family member(s) | | Publication date |
|---|---|---|---|---|---|
| US 6130713 | A | 10-10-2000 | NONE | | |
| WO 2006061828 | A | 15-06-2006 | EP | 1829364 A2 | 05-09-2007 |
| | | | KR | 20070085867 A | 27-08-2007 |
| WO 2006113414 | A | 26-10-2006 | NONE | | |

EPO FORM P0459

For more details about this annex : see Official Journal of the European Patent Office, No. 12/82

17

**EP 1 924 080 A1**

**REFERENCES CITED IN THE DESCRIPTION**

**Patent documents cited in the description**

- KR 1020060112413